# EUROPEAN PATENT APPLICATION

(11) **EP 1 371 545 A2**
(43) Date of publication of application: **17.12.2003**
(21) Application number: 03011843.4
(22) Date of filing: 26.05.2003
(51) Int. Cl.: B62K 21/12, B62K 19/40

(54) **Bicycle handlebar**

(30) Priority: 10.06.2002 US 164586
(71) Applicant: Shimano Inc., Sakai-shi, Osaka (JP)
(72) Inventor: Oi, Takeshi, Sakai-shi, Osaka (JP); Kitagawa, Kozo, Nishinomiya-shi, Hyogo (JP); Komatsu, Atsushi, Izumi-shi, Osaka (JP)
(74) Representative: Grosse, Wolfgang, Dipl.-Ing.

(57) **Abstract**

A bicycle handlebar 12 is provided that has a center portion 30, a first end portion 31 and a second end portion 32. The first end portion 31 is located on a first lateral side of the center portion 30. The second end portion 32 is located on a second lateral side of the center portion 30. The center portion 30, the first end portion 31 and the second end portion 32 are formed together as a one-piece, unitary tubular member. At least one the center portion 30, the first end portion 31 and the second end portion 32 includes a tubular attachment portion having an exterior cross sectional surface with at least one flat alignment surface 54. The flat alignment surface 54 facilitates in mounting components and/or accessories, such as hand grips, shifters, brake levers, mirrors, displays, etc., to the handlebar.

## Description

### BACKGROUND OF THE INVENTION

### 1. Field of the Invention

This invention generally relates to a bicycle handlebar. More specifically, the present invention relates a bicycle handlebar that is configured to facilitate mounting of components and/or accessories, such as hand grips, shifters, brake levers, mirrors, displays, etc.

### 2. Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle.

Bicycles are constantly being made to be more user friendly and more convenient for the rider to operate. Accordingly, bicycles now have many more additional accessories to assist the rider than in the past. For example, cycle computers, electronic shifters, mirrors, horns are now available for bicycles. These bicycle accessories and other bicycle components such as brake lever are often mounted on the handlebar of the bicycle. Generally, the handlebar for a bicycle is made from a metallic pipe and integrally comprises a central portion that is mounted to a handlebar stem and a pair of gripping portions located at the free ends. The handlebar typically has a round cross section with the bicycle accessories and components mounted thereon through pipe or band clamps. Since the handlebar typically has a round cross section, the bicycle accessories and/or components sometime rotate relative to the handlebar. This rotational movement of the bicycle accessory and/or component relative to the handlebar can be very inconvenient for the rider.

In view of the above, there exists a need for an improved bicycle handlebar that is configured to facilitate mounting of bicycle accessories and bicycle components. This invention addresses this need in the prior art as well as other needs, which will become apparent to those skilled in the art from this disclosure.

### SUMMARY OF THE INVENTION

One object of the present invention is to provide a bicycle handlebar that is configured to facilitate mounting of bicycle accessories and bicycle components.

Another object of the present invention is to provide an improved bicycle handlebar that is relatively easy and inexpensive to manufacture.

In accordance with one aspect of the present invention, a bicycle handlebar is provided that comprises a center portion, a first end portion and a second end portion. The first end portion is located on a first lateral side of the center portion. The second end portion is located on a second lateral side of the center portion. The center portion, the first end portion and the second end portion are formed together as a one-piece, unitary tubular member. At least one the center portion, the first end portion and the second end portion includes a first tubular attachment portion having an exterior surface with at least one flat alignment surface.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of a bicycle with a straight type handlebar mounted thereon in accordance with a first embodiment of the present invention;
Figure 2 is a top plan view of a portion of the bicycle illustrated in Figure 1 with the handlebar of the present invention;
Figure 3 is a front perspective view of a portion of the handlebar stem and the center portion of the handlebar in accordance with the present invention illustrated in Figures 1 and 2;
Figure 4 is a cross sectional view of the handlebar as illustrated in Figures 1-3 as seen along section line 4-4 of Figure 3;
Figure 5 is a cross sectional view of the handlebar as illustrated in Figures 1-4 as seen along section line 5-5 with the handlebar stem removed;
Figure 6 is a rear perspective view of a portion of the handlebar illustrated in Figures 1-5 with a cycle computer coupled thereto in accordance with the present invention;
Figure 7 is a cross sectional view of a portion of the handlebar illustrated in Figures 1-6 with a portion of the mirror coupled thereto in accordance with the present invention;
Figure 8 is a partial elevational view of a portion of the handlebar shown in Figures 1-7 with a grip and a brake lever coupled thereto in accordance with the present invention;
Figure 9 is a partial perspective view of a portion of the handlebar illustrated in Figures 1-8 with an electronic shifter coupled thereto in accordance with the present invention;
Figure 10 is a side elevational view of another bicycle with a drop type handlebar mounted thereon in accordance with a second embodiment of the present invention;
Figure 11 is a perspective view of the handlebar shown in Figure 10 with all accessories removed for purposes of illustration;
Figure 12 is a partial side elevational view of a portion of the handlebar illustrated in Figures 10 and 11 with the brake/shifter component coupled thereto; and
Figure 13 is a partial cross sectional view of the handlebar and brake/shifter component in accordance with the present invention as seen along section line 13-13 of Figure 12.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

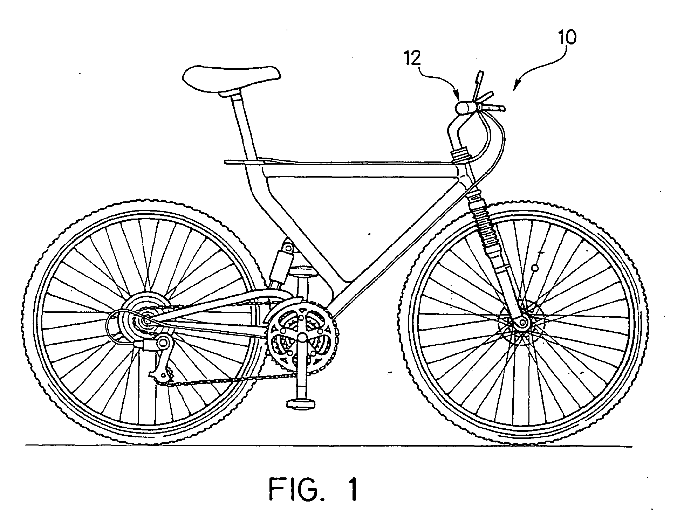

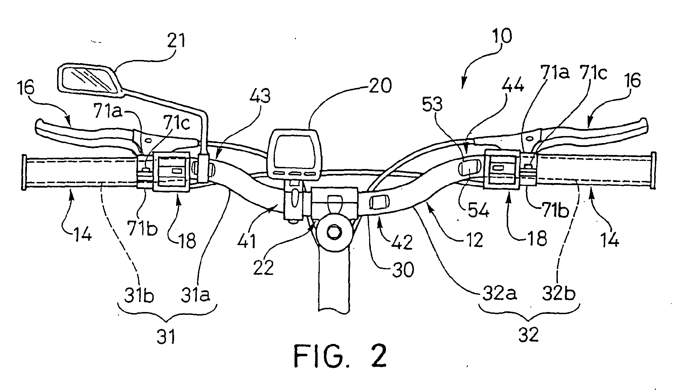

Referring initially to Figures 1 and 2, a bicycle 10 is illustrated with a handlebar 12 in accordance with a first embodiment of the present invention. The handlebar 12 in this embodiment is an up type handlebar which is also sometimes called a flat or straight type. The handlebar 12 is configured to facilitate the mounting of bicycle components, bicycle accessories, hand grips, shifters, brake levers, etc. For example, the handlebar 12 has a pair of grips 14, a pair of brake levers 16, a pair of shifters 18, a cycle computer 20 and a mirror 21 mounted thereto in accordance with a first embodiment of the present invention. While only one mirror is mounted to the handlebar 12, it will be apparent to those skilled in the art from this disclosure that another mirror can be mounted on the right side of the handlebar 12.

In describing the handlebar 12 of the present invention, various directional terms may be used. As used herein, the following directional terms "forward, rearward, above, downward, vertical, horizontal, below, lateral and transverse" as well as any other similar directional terms refer to those directions of the bicycle 10 equipped with the handlebar 12 of the present invention. Accordingly, these terms, as utilized to describe the present invention should be interpreted relative to a bicycle equipped with the present invention.

The bicycle 10 and its various components are well known in the prior art, except for the handlebar 12 and the mounting of the items thereto. Thus, the bicycle 10 and its various components will not be discussed or illustrated in detail herein, except for the components or accessories that relate to the handlebar 12 of the present invention.

As seen in Figure 2, the handlebar 12 is basically a hollow tubular member that forms a somewhat straight bar body. The handlebar 12 extends outwardly in both directions from a handlebar stem 22 of the bicycle 10. In other words, each half of the handlebar 12 extends in a substantially horizontal direction from the center longitudinal axis of the frame of the bicycle 10. The handlebar 12 basically comprises a center portion 30, a first end portion 31 and a second end portion 32. The center portion 30 and the first and second end portions 31 and 32 are integrally formed together as a one-piece, unitary tubular member. In other words, the handlebar 12 is preferably constructed from a single tube that is bent or otherwise deformed to the desired shape in accordance with the present invention. The handlebar 12 is preferably formed from a steel or light alloy pipe. Of course, other suitable materials can be used to construct the handlebar 12 in accordance with the present invention.

The center portion 30 is a substantially straight section of the handle bar 12. The center portion 30 has a mounting section 33 that is secured to the handlebar stem 22 of the bicycle 10. Specifically, the handlebar stem 22 has a pair of clamping portions or members 34a and 34b that are coupled together by a pair of fasteners or bolts 34c (only one shown). Each of the clamping members 34a and 34b has a groove that corresponds to slightly less than half the mounting section 33 of the handlebar 12. When the first and second clamping members 34a and 34b are coupled together they form a bore for receiving the mounting section 33 of the handlebar 12 therein. Each of the grooves of the clamping members 34a and 34b has a pair of curved surfaces 35 located on opposite sides of a flat alignment surface 36.

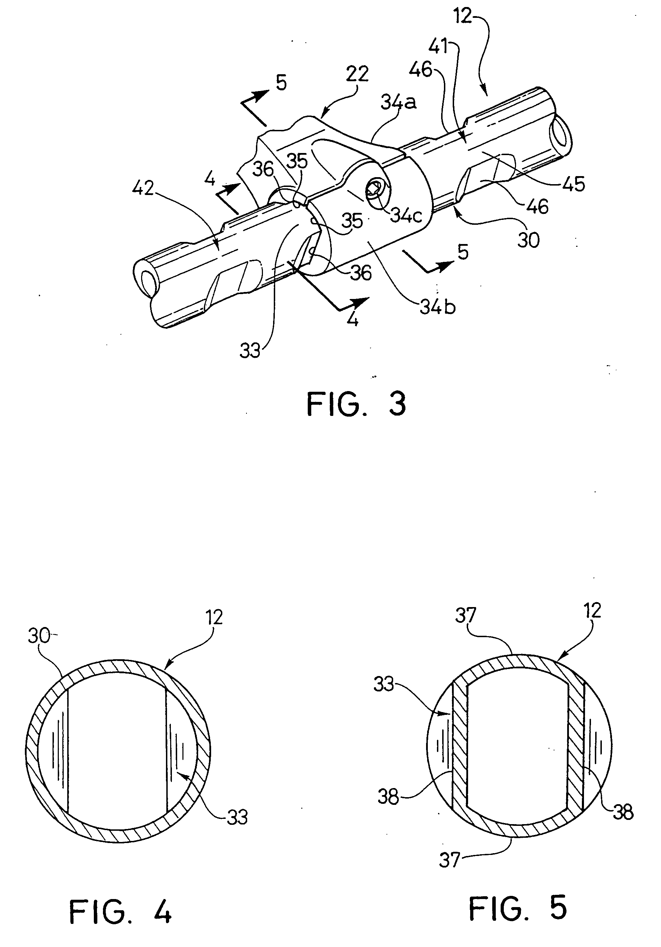

Referring now to Figures 3-5, the flat surfaces 36 of the handlebar stem 22 contact the mounting section 33 of the handlebar 12 to hold the handlebar 12 in a predetermined position relative to the handlebar stem 22. More specifically, the mounting section 33 of the handlebar 12 has an exterior surface formed by a pair of curved surfaces 37 with a pair of flat alignment surfaces 38 extending between the curved surfaces 37. The alignments surfaces 38 are preferably parallel surfaces. Of course, it will be apparent to those skilled in the art from this disclosure that a single flat alignment surface could be utilized instead of a pair of flat alignment surfaces 38 to carry out the present invention. Moreover, it will apparent to those skilled in the art from this disclosure, that the mounting section 33 of the handlebar 12 can be circular if it is desirable to have the handlebar 12 adjustable relative to the handlebar stem 22. Also it will be apparent to those skilled in the art from this disclosure that the orientation of the alignment surfaces 38 can be formed at different locations than those shown if needed and/or desired.

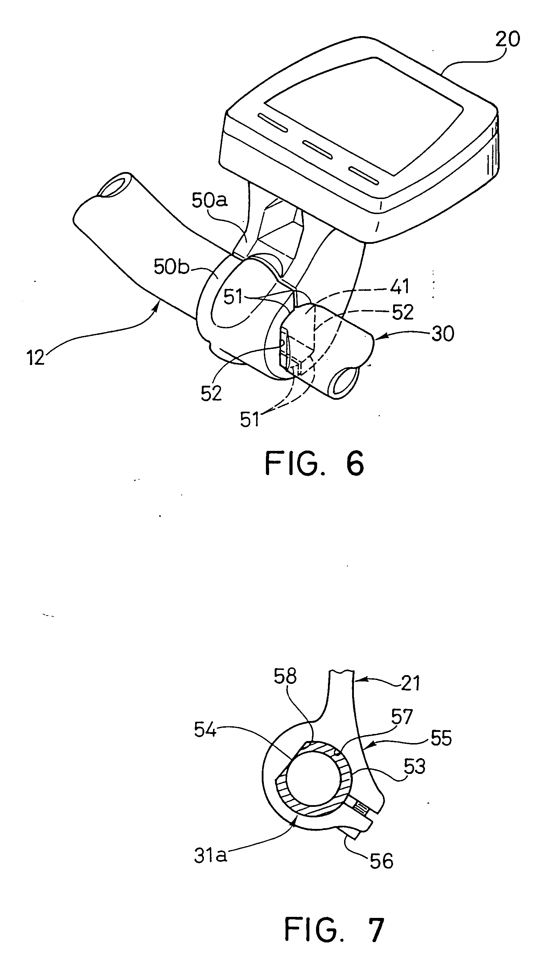

The center portion 30 further includes a first pair of accessory mounting arrangements 41 and 42 located on opposite sides of the mounting section 33 of the handlebar 12. The cycle computer 20 is preferably mounted to the center portion 30 of the handlebar 12 by one of the mounting arrangements 41 and 42. As seen in Figures 3 and 6, the mounting arrangement 41 preferably has an exterior surface formed of a pair of opposed curved surfaces 45 and a pair of parallel flat alignment surfaces 46. The alignment surfaces 46 are designed for mounting a bicycle accessory or bicycle component thereto. In the illustrated embodiment, the cycle computer 20 is mounted to the mounting arrangement 41.

As seen in Figure 6, the cycle computer 20 preferably has a mounting portion formed by a pair of clamping portions or members 50a and 50b that are coupled together by a pair of fasteners or bolts (not shown). The clamping members 50a and 50b are substantially identical in construction to the clamping members 34a and 34b of the handlebar stem 22. Each of the clamping members 50a and 50b has a groove that corresponds to slightly less than half the exterior surface of the mounting arrangement 41. When the first and second clamping members 50a and 50b are coupled together they form a bore for receiving the mounting arrangement 41 of the handlebar 12 therein. Each of the grooves of the clamping members 50a and 50b has a pair of curved surfaces 51 located on opposite sides of a flat alignment surface 52. In other words, the bore formed by the curved surfaces 51 and the flat alignment surface 52 has a cross section corresponding to the exterior surface of the mounting arrangement 41 of the handlebar 12. Thus, the relative angular position of the cycle computer 20 is fixed relative to the handlebar 12 when the cycle computer 20 is mounted on the mounting arrangement 41.

Preferably, as in the illustrated embodiment, as seen in Figure 3, the exterior surfaces of the mounting arrangements 41 and 42 have the same cross sections as the mounting section 33 as seen in Figure 5. Since the exterior surface of the mounting arrangement 42 is identical to the mounting arrangement 41, the mounting arrangement 42 will not be illustrated in detail herein. Of course, it will be apparent to those skilled in the art from this disclosure that a single flat alignment surface could be utilized instead of a pair of flat alignment surfaces for the accessory mounting arrangements 41 and 42 to carry out the present invention. Moreover, it will be apparent to those skilled in the art from this disclosure that the orientation of the alignment surfaces of the accessory mounting arrangements 41 and 42 can be formed at different locations than those shown if needed and/or desired.

As seen in Figure 2, the first end portion 31 is located on a first lateral side of the center portion 30, while the second end portion 32 is located on a second lateral side of the center portion 30. Preferably, the first end portion 31 and the second end portion 32 are mirror images of each other relative to the center portion 30. Of course, it will be apparent to those skilled in the art from this disclosure that the first and second end portions 31 and 32 do not need to be mirror images of each other.

The first end portion 31 preferably has an inner section 31a and an outer gripping section 31b. In this embodiment, the inner section 31a is bent so that the outer gripping section 31b has its center axis offset from the center axis of the center portion 30. Likewise, the second end portion 32 preferably has an inner section 32a and an outer gripping section 32b. The mirror 21 is mounted to the inner section 31 a of the first end portion 31. Preferably, another mirror is mounted to the inner section 32a of the second end portion 32. In particular, the inner sections 31a and 32a are configured to form a second pair of accessory mounting arrangements 43 and 44, respectively.

Referring now to Figures 2 and 7, the mounting arrangements 43 and 44 have an exterior surfaces formed of a single curved surface 53 and a single flat alignment surface 54. The accessory mounting arrangement 43 has the mirror 21 coupled thereto. The alignment surface 53 insures that the mirror 21 is maintained in the predetermined position relative to the handlebar 12. In particular, the mirror 21 has a mounting portion 55 in the form of a tubular clamping member. The mounting portion 55 of the mirror 21 is preferable made of a material such as a plastic material that allows the bore of the mounting portion 55 to be expanded over the handlebar 12. In particular, the mounting portion 55 of the mirror 21 is a slit ring with a bore that is adjustable in diameter by a fastener or bolt 56. The interior surface of the bore of the mounting portion 55 corresponds to the exterior surface of the accessory mounting arrangement 42. Thus, the bore of the mounting portion 55 has a single curved surface 57 and a single flat alignment surface 58 that forms the interior surface of the bore of the mounting portion 55.

Preferably, as in the illustrated embodiment, the exterior surfaces of the mounting arrangements 43 and 44 have the same cross section as seen in Figure 7. Since the exterior surfaces of the mounting arrangement 44 is identical to the mounting arrangement 43, the mounting arrangement 44 will not be illustrated in detail herein. Of course, it will be apparent to those skilled in the art from this disclosure that a pair of flat alignment surfaces could be utilized for the mounting arrangements 43 and 44 to carry out the present invention. Moreover, it will be apparent to those skilled in the art from this disclosure that the orientation of the alignment surfaces for the mounting arrangements 43 and 44 can be formed at different locations than those shown if needed and/or desired.

Referring now to Figures 2, 8 and 9, each of the outer gripping sections 31b and 32b also preferably has three accessory mounting arrangements 61, 62 and 63 for mounting one of the grips 14, one of the brake levers 16 and one of the shifters 18 thereon, respectively. The mounting arrangements 61-63 have exterior surfaces with the same cross sections as the mounting section 33 as seen in Figure 5. Thus, the exterior surfaces of the accessory mounting arrangements 61-63 will not be discussed or illustrated in detail herein. These accessory mounting arrangements 61-63 are configured for maintaining the grips 14, the brake levers 16 and the shifters 18 in the predetermined orientation on the handlebar 12.

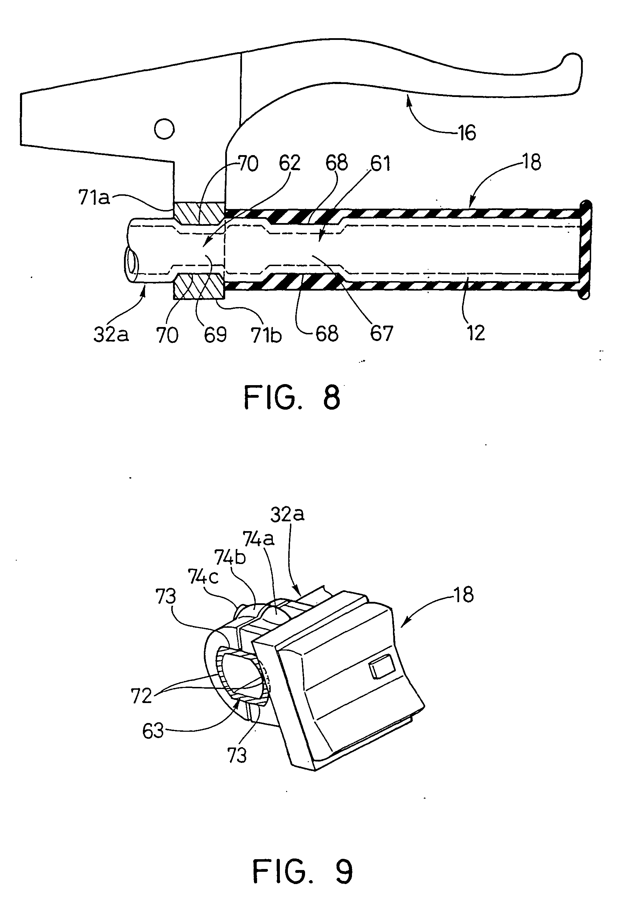

Referring to Figure 8, the mounting arrangements 61 and 62 are illustrated. The mounting arrangement 61 has an exterior surface formed of a pair of opposed curved surfaces 67 (only one shown) and a pair of parallel flat alignment surfaces 68. The alignment surfaces 68 are designed for mounting one of the grips 14 thereto. In particular, the grips 14 have bores with interior surface that correspond to the interior surfaces of the outer gripping sections 31b and 32b. Thus, the interior surfaces of the grips 14 have portions that correspond the exterior surfaces formed by the curved surfaces 67 and the flat alignment surfaces 68. Since the grips 14 are constructed of a resilient rubber material or the like, the grips 14 can be temporarily deformed to be inserted onto the outer gripping sections 31b and 32b of the handlebar 12. Thus, the grip 14 is prevented from rotating or sliding off the handlebar 12.

Still referring to Figure 8, the mounting arrangement 62 has an exterior surface formed of a pair of opposed curved surfaces 69 (only one shown) and a pair of parallel flat alignment surfaces 70. The alignment surfaces 70 are designed for mounting one of the brake levers 16 thereto. The brake lever 16 has a pair of clamping portions or members 71a and 71b that are coupled together by a pair of fasteners or bolts 71c (only one shown in Figure 2). Each of the clamping members 71a and 71b has a groove that corresponds to slightly less than half the accessory mounting arrangement 62 of the handlebar 12. When the first and second clamping members 71a and 71b are coupled together they form a bore for receiving the accessory mounting arrangement 62 of the handlebar 12 therein. The first and second clamping members 71a and 71b are similar in theirs constructions to the clamping members 34a and 34b, and thus, they will not be discussed in detail herein.

Referring to Figure 9, the accessory mounting arrangement 63 is illustrated for mounting one of the shifters 18 to the handlebar 12 in the predetermined orientation. The mounting arrangement 63 has an exterior surface formed of a pair of opposed curved surfaces 72 and a pair of parallel flat alignment surfaces 73. The alignment surfaces 73 are designed for mounting one of the shifters 18 thereto. The shifter 18 has a pair of clamping portions or members 74a and 74b that are coupled together by a pair of fasteners or bolts 74c (only one shown in Figure 9). Each of the clamping members 74a and 74b has a groove that corresponds to slightly less than half the mounting arrangement 63 of the handlebar 12. When the first and second clamping members 74a and 74b are coupled together they form a bore for receiving the mounting arrangement 63 of the handlebar 12 therein. The first and second clamping members 74a and 74b are similar in theirs constructions to the clamping members 34a and 34b, and thus, they will not be discussed in detail herein.

### SECOND EMBODIMENT

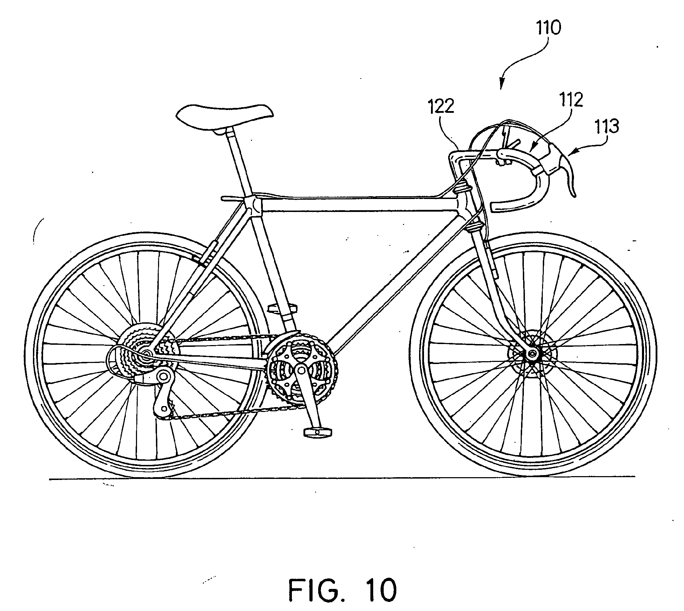

Referring now to Figures 10-13, a bicycle 110 with a handlebar 112 in accordance with a second embodiment of the present invention will now be explained.

The handlebar 112 in this embodiment is a drop type handlebar. The handlebar 112 is configured to facilitate the mounting of bicycle components, bicycle accessories, hand grips, shifters, brake levers, etc. For example, the handlebar 112 has a pair of dual control levers 113 mounted thereto in accordance with the present invention. It will be apparent to those skilled in the art from this disclosure that additional accessories or components can be mounted on the handlebar 112 in accordance with the present invention.

In view of the similarity between the first and second embodiments, the descriptions of the parts of the second embodiment that are identical to the parts of the first embodiment may be omitted for the sake of brevity.

The handlebar 112 is basically a hollow tubular member that has an overall shape of a conventional drop type handlebar. The handlebar 112 extends outwardly in both directions from a handlebar stem 122 of the bicycle 110 and then extends in a forward direction before curving downwardly and rearwardly. In other words, handlebar 112 basically comprises a straight center portion 130, a first curved end portion 131 and a second curved end portion 132. The center portion 130 and the first and second curved end portions 131 and 132 are integrally formed together as a one-piece, unitary tubular member. In other words, the handlebar 112 is preferably constructed from a single tube that is bent or otherwise deformed to the desired shape in accordance with the present invention. The handlebar 112 is preferably formed from a steel or light alloy pipe. Of course, other suitable materials can be used to construct the handlebar 112 in accordance with the present invention.

The center portion 130 has a mounting section 133 that is secured to the handlebar stem 122 of the bicycle 110. Specifically, the handlebar stem 122 has a pair of clamping portions or members 134a and 134b that are coupled together by a pair of fasteners or bolts 134c. Each of the clamping members 134a and 134b has a groove that corresponds to slightly less than half the mounting section 133 of the handlebar 112. When the first and second clamping members 134a and 134b are coupled together they form a bore for receiving the mounting section 133 of the handlebar 112 therein. The mounting section 133 has the same cross section as the mounting section 33 of the first embodiment as seen in Figure 5. The first and second clamping members 134a and 134b are similar in theirs constructions to the clamping members 34a and 34b of the first embodiment, and thus, they will not be discussed in detail herein.

The center portion 130 also has a first pair of mounting arrangements 141 and 142 to facilitate the mounting of bicycle components or accessories thereto. The mounting arrangements 141 and 142 have the same cross sections as the mounting section 33 of the first embodiment as seen in Figure 5. Thus, the mounting arrangements 141 and 142 will not be discussed in detail herein.

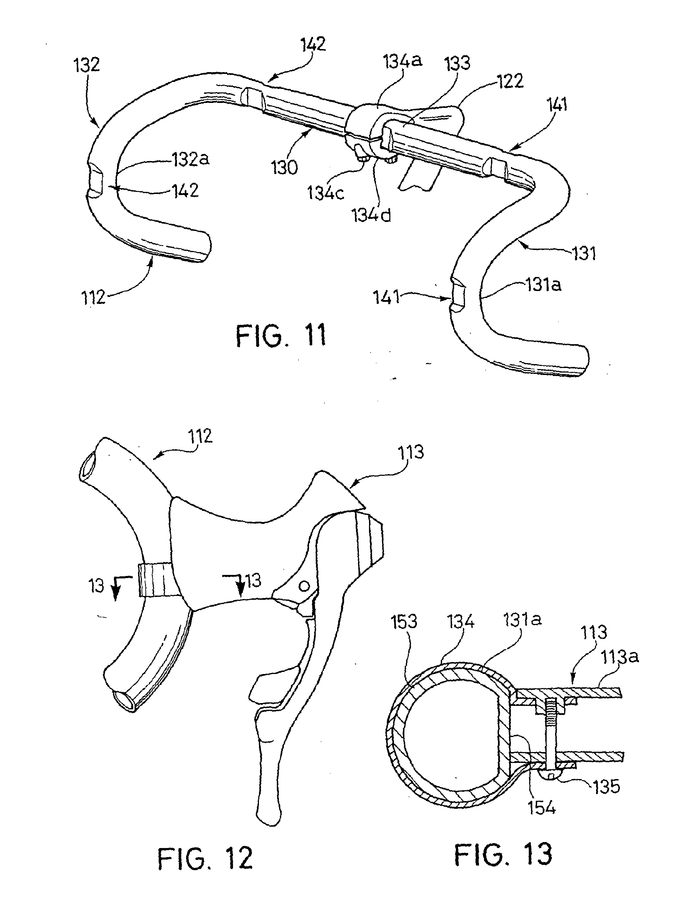

As seen in Figure 11, the first end portion 131 is located on a first lateral side of the center portion 130, while the second end portion 132 is located on a second lateral side of the center portion 130. Preferably, the first end portion 131 and the second end portion 132 are mirror images of each other relative to the center portion 130.

The first end portion 131 preferably has a gripping section 131a. Likewise, the second end portion 132 has a gripping section 132a. The dual control levers 113 are mounted to the gripping sections 131a and 132a of the first and second end portions 131 and 132. In particular, the gripping sections 131a and 132a are configured to form a second pair of mounting arrangements 141 and 142. Preferably, as in the illustrated embodiment, the exterior surfaces of the mounting arrangements 141 and 142 have the same cross sections. Since the exterior surface of the mounting arrangement 142 is identical to the mounting arrangement 141, the mounting arrangement 142 will not be illustrated in detail herein. As seen in Figure 13, the exterior surface of the mounting arrangement 142 is formed of a single curved surface 153 and a single flat alignment surface 154.

As seen in Figures 12 and 13, the dual control levers 113 are mounted to the first and second curved end portions 131 and 132 by a metal band clamp 134 with a fastener or bolt 135. In particular, the metal band clamp 134 is fixedly coupled to the brake bracket 113a by the bolt 135. The brake bracket 113a and the metal band clamp 134 both contact the flat alignment surface 154 to prevent relative movement between the dual control lever 113 and the handlebar 112.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle handlebar (12,112) comprising:
a center portion (30, 130)
a first end portion (31, 131) located on a first lateral side of said center portion; and
a second end portion (32, 132) located on a second lateral side of said center portion; said center portion, said first end portion and said second end portion being formed together as a one-piece, unitary tubular member,
at least one said center portion, said first end portion and said second end portion including a first tubular attachment portion having an exterior surface with at least one flat alignment surface (38, 46, 54, 68, 70, 73, 154).

2. The bicycle handlebar (12,112) according to claim 1, wherein
said at least one flat alignment surface (38, 46, 54, 68, 70, 73, 154) of said exterior surface of said first tubular attachment portion includes first and second flat alignment surfaces

3. The bicycle handlebar (12, 112) according to claim 2, wherein
said first and second flat alignment surfaces are substantially parallel.

4. The bicycle handlebar (12, 112) according to claim 3, wherein
said exterior surface of said first tubular attachment portion includes first and second curved surfaces located between said first and second flat alignment surfaces.

5. The bicycle handlebar (12, 112) according to any of the preceding claims, wherein
said first end portion (31, 131) includes a first gripping section (31a, 131a) located at a first free end with said first tubular attachment portion formed along said first gripping section (31a, 131 a), and
said second end portion (32, 132) includes a second gripping section (32a, 132a) located at a second free end with a second tubular attachment portion formed along said second gripping section (32a, 132a), said second tubular attachment portion having exterior surface with at least one flat alignment surface.

6. The bicycle handlebar (12, 112) according to claim 5, wherein
said first gripping section (31a, 131a) with said first tubular attachment portion is a substantially straight tubular section, and
said second gripping section (32a, 132a) with said second tubular attachment portion is a substantially straight tubular section.

7. The bicycle handlebar (12, 112) according to claim 5, wherein
said first gripping section (31a, 131a) with said first tubular attachment portion is a curved tubular section, and
said second gripping section (32a, 132a) with said second tubular attachment portion is a curved tubular section.

8. The bicycle handlebar (12, 112) according to claim 7, wherein
said exterior surface of said first tubular attachment portion has a continuous convex surface extending form opposite sides of said flat alignment surface.

9. The bicycle handlebar (12, 112) according to claim 1, wherein
said first end portion (31, 131) includes a first gripping section (31a, 132a) located at a first free end and a first inner section located between said center portion and said first gripping section (3 1a, 131a), said first tubular attachment portion being formed along said first inner section, and
said second end portion (32a, 132a) includes a second gripping section (32a, 132a) located at a first free end and a second inner section located between said center portion and said second gripping section (32a, 132a), said second inner section having a second tubular attachment portion with at least one flat alignment surface form along an exterior surface of said second inner section.
